# EUROPEAN PATENT SPECIFICATION

(11) **EP 4 363 811 B1**
(45) Date of publication and mention of the grant of the patent: **26.11.2025**
(21) Application number: 22747216.4
(22) Date of filing: 29.06.2022
(51) Int. Cl.: G01G 11/00

(54) **WEIGHING AND TRANSPORTATION SYSTEM**
WÄGE- UND TRANSPORTSYSTEM
SYSTÈME DE PESAGE ET DE TRANSPORT

(30) Priority: 29.06.2021 US 202163216465 P
(43) Date of publication of application: 08.05.2024
(73) Proprietor: BAADER Food Systems USA, Inc., Kansas City, KS 66115 (US)
(72) Inventor: FOLTZ, Ryan John, Kansas City, KS 66115 (US); O'DELL, Ryan Wesley, Kansas City, KS 66115 (US); LAUER, Gerald Kent, Kansas City, KS 66115 (US); BARNETT, Douglas Bryan, Kansas City, KS 66115 (US)
(74) Representative: Stork Bamberger Patentanwälte PartmbB
(86) International application number: PCT/US2022/035481
(87) International publication number: WO 2023/278546

(56) References cited:
- WO-A2-2021/035025

## Description

The present invention relates to an apparatus for transporting and weighing of food parts, the apparatus comprising: a conveying system adapted to advance said food parts in a first direction comprising at least one belt conveyor, a weighing station comprising at least one scale unit adapted to determine the weights of said food parts, at least one controllable transfer unit adapted to selectively transfer particular ones of said food parts from said belt conveyor to said scale unit or vice versa, wherein said transfer unit comprises at least one pivotable first guide adapted to controllably transfer said particular ones of said food parts (102). Furthermore, the present inventions relates to a method for transporting and weighing of food parts, the method comprising the steps: conveying the food parts in a first direction by a conveying system comprising at least one belt conveyor, determining the weights of said food parts with a weighing station comprising at least one scale unit, selectively transferring particular ones of said food parts said belt conveyor to said scale unit or vice versa by at least one controllable transfer unit by pivoting a first guide to controllably transfer said particular ones of said food parts. Additionally, the present invention relates to an apparatus for grading and batching of food parts.

The rapid processing of food items creates handling challenges. For example, the large-scale processing of animals for consumption involves removal of tissues from the animal in preparation for batching the food parts for delivery to a customer or a consumer. The batching of food parts involves gathering food parts of particular grade characteristics into a group. Characteristics include food part type, size, and weight. The speed of processing presents challenges to the accurate weighing and transportation of the food parts.

Document WO 2021/035025 A2 discloses an apparatus for grading and batching of food parts with a scale unit adapted to determine the weights of each food part with a first predetermined precision, a plurality of batch bins adapted to receive a set of selected food parts, a weighing station adapted to weigh those food parts, which have not yet been transferred into said batch bins , with a second predetermined precision being greater than the first predetermined precision and to associate each of the determined weights with the corresponding food part. A plurality of controllable second transfer units are adapted to selectively transfer particular ones of said food parts, which have been weighed into a selected one of said batch bins. A control unit operatively connected with said scale unit, said weighing station, said first transfer unit and said second transfer unit, wherein said control unit is adapted to control said first transfer unit and said second transfer unit in order to assemble in each of said bins a plurality of said food parts to such an extent that the total weight of said food parts collected in each of said batch bins corresponds to a predetermined target weight.

Processing systems using dynamic weighing processes have low accuracy. The higher the throughput rate, the greater the inaccuracy of the weight determination involved in dynamic weighing processes.

It is therefore an object of the present invention to provide an apparatus and a method for weighing and transportation of food parts, which can be operated with high processing speed, i.e. with increased through-put rate, together with high accuracy of the weight determination of each food part or food item, respectively. Furthermore, it is an object of the present invention to provide an apparatus and a method for grading and batching of food parts.

The object is achieved by the apparatus referred to hereinbefore, characterized in that said first guide comprises a guidance face permeable to air.

Thus, according to the present invention, a high processing speed is achieved. The guidance face permeable to air of said first guide minimizes an air flow caused by the proper motion of said first guide. Consequently, any influences caused by air movement, which might lead to disturbance while measuring the weights of said food parts using said scale unit, are also minimized, resulting in a precise and highly accurate weight determination.

According to an advantageous development of the invention, said guidance face is perforated. This ensures on the one hand that a correspondingly large amount of air moves through said first guide preventing major air movements and on the other hand that said first guide has the mechanical rigidity for reliably guiding said food parts. In particular, said guidance face has a lattice-like structure.

A preferred development of the invention is characterized in that at least 50 percent of said guidance face is permeable to air. In other words, the proportion of the surface area being covered by airtight material is 50 percent or less resulting in the desired air permeability to reduce any major noise effects influencing the weight measurement. According to a further advantageous embodiment of the invention, said guidance face comprises a grid constructed from round wires. The round shape is advantageously aerodynamical air flow through the guidance face per time unit. Moreover, without any sharp edges the food items are gently processed reducing the risk of any damage of said food items.

A further preferred embodiment of the invention provides that said first guide comprises a pocket having a receptacle for capturing said food part. This ensures that the food parts are reliably guided, even at high operating speed or affecting acceleration forces. Thus, the pocket constitutes a receptacle area in which the food part is securely guided during movement of said first guide.

A further preferred embodiment of the invention provides that said first guide comprises a first guidance arm having a closed surface adapted to move said particular ones of said food parts, wherein said guidance face is arranged on top of said guidance arm forming a first upper guide. The closed surface of said first guidance arm ensures that the food items are moved reliably and precisely. At the same time, not get caught up by said first guidance arm. Consequently, the food parts come clear from said first guidance arm after they have been moved into the desired position.

A preferred development of the invention is characterized in that the height of said first guidance arm is slightly greater than the maximum height of any one of said particular ones of said food parts. Advantageously, the height of said first guidance arm is adapted to the maximum height of said food parts in order to minimize any air movement caused by said first guidance arm.

According to a further advantageous embodiment of the invention, said scale unit comprises a static scale and a pivotable second guide, wherein said first guide is operably controlled by a first actuator and said second guide is operably controlled by a second actuator and wherein said first guide is adapted to controllably move food parts supplied by said first conveyor onto said scale and said second guide is adapted to controllably move said food parts from said scale onto a discharge conveyor after weighing. The use of said first and second guide has the advantage that the processing speed is increased. While one of said guides is still moving one of said food parts, the other one of said guides can already begin to act upon another one of said food parts.

A preferred embodiment is characterized in that said second guide comprises a guidance arm having a closed surface adapted to move said particular ones of said food parts, wherein said guidance face is arranged on top of said guidance arm forming a second upper guide. The closed surface of said guidance arm ensures that the food items are moved reliably and precisely. At the same time, the closed surface ensures that the food parts do not get caught up by said guidance arm. Consequently, the food parts come clear from said guidance arm after they have been moved into the desired position.

According to an advantageous development, the height of said second guidance arm is slightly greater than the maximum height of any one of said particular ones of said food parts. Advantageously, the height of said guidance arm is adapted to the maximum height of said food parts in order to minimize any air movement caused by said second guidance arm.

A further preferred embodiment of the invention provides that said first actuator and said second actuator each comprise end stopping elements adapted to limit the pivoting range of said first guidance arm and said second guidance arm. The stopping elements have the advantage that the pivoting range is precisely mechanically limited. Thus, the complete pivoting control is improved.

A further advantage of the invention is characterized in that said end stopping elements each comprise a pivotable first end member attached to said first or second actuator and a stationary second end member, wherein said first end member and said second end member have correspondingly shaped contact regions adapted for interlocking with each other. Advantageously, said first end member is adapted to interlock with said second end member in two directions. This improves the control of the lateral deflection of the food items.

A preferred embodiment is characterized in that said end stopping elements are spaced apart from each other. Advantageously, contact forces and wear are significantly reduced. Furthermore, the compliance with said actuators are improved.

A preferred embodiment is characterized in that said first actuator and said second actuator each comprises a supporting element attached with one end to a free end region of said first guide and said second guide, respectively, and the other end attached to said first actuator and said second actuator having an inclined position. This ensures that the first and second guides are exactly perpendicular to their respective pivoting axis. Otherwise, appearing vertical deflections of the first and second guides under influence of gravity are prohibited.

A further advantage of the invention is characterized in that said supporting elements are length-adjustable. Advantageously, the first and second guide can be aligned precisely by adjusting the length of said supporting elements.

A preferred embodiment is characterized in that the end stopping elements are detachably arranged. This offers the advantage that end stopping can be replaced easily and/or can be inspected during maintenance.

According to a further advantageous embodiment of the invention said static scale is mechanically decoupled from any of said conveyors. Thus, the introduction of vibrations from the surrounding machinery into the weight measurement taken of the food part is minimized in order to safeguard a weight measurement of high accuracy.

A preferred embodiment of the invention is characterized in that said conveyors comprise openings allowing air to pass through. Thus, any residual air movements caused by said guides or major air movements caused by operating said guides at highest speed are let through these openings in order to prevent any significant disturbance during the weighing of said food parts.

Advantageously said conveyors comprise elongated side support elements extending in said first direction and transverse support elements arranged in between said side support elements. Said elongated side support elements serves as holding elements for fixing the transverse support elements.

In particular, said transverse support elements are aligned inclined relating to said side support elements resulting in reduced air turbulences and/or air movement caused by said conveyor. Optionally, said transverse support elements forms a staggered support structure.

According to a further advantageous embodiment of the invention, said staggered support structure is arranged in a herringbone pattern. Thus, a very high mechanical rigidity with as few of said transverse support elements as possible is achieved. The smaller number of said transverse support elements used, the less air movements is caused and, consequently, the total amount of disturbance regarding the weight measurements is significantly reduced.

A further preferred embodiment of the invention provides that the transverse support elements are cylindrically-shaped. The round shape is advantageously aerodynamical by reducing the air resistance in order to let the maximum possible amount of air flow through the openings per time unit. Another aspect of the cylindrical shape of the transverse support elements is that fluids can better drip off. Thus, the transverse support elements are helpful to fulfill the high hygiene regulations which apply in the field of food processing.

The object is also achieved by the apparatus for grading and batching of food parts referred to hereinbefore, the apparatus comprising at least one apparatus for transporting and weighing said food parts described hereinbefore to determine the weights of said food parts, a plurality of batch bins adapted to receive a set of selected food parts, wherein each said batch bin is associated with a controllable transfer unit adapted to selectively transfer particular ones of said food parts into a selected one of said batch bins, a control unit operatively connected with said scale unit and said transfer unit, wherein said control unit is adapted to control said transfer unit in order to assemble a plurality of said food parts in each of said bins according to a predetermined provision of distribution. With the several advantages mentioned hereinbefore regarding said apparatus for transporting and weighing of said food parts said food parts can be arranged into batches with high accuracy even when the processing speed is high.

In addition, the object is also achieved by the method for transporting and weighing of food parts referred to hereinbefore, characterized in that said first guide comprises a guidance face permeable to air.

A preferred embodiment of the method is characterized by transferring said particular ones of said food parts by said first guide having a perforated guidance face.

According to an advantageous embodiment of the invention, said guidance face has a lattice-like structure.

According to an advantageous embodiment of the invention, at least 50 percent of said guidance face is permeable to air. Preferably, said guidance face comprises a grid constructed from round wires.

According to an advantageous development of the invention said food parts are captured within a receptacle formed by a pocket of said first guide.

A preferred embodiment of the method is characterized by weighing said food parts with said scale unit, wherein said scale unit comprises a static scale and by operably controlling said first guide by a first actuator and a second guide by a second actuator, moving said food parts supplied by said first conveyor onto said static scale by said first guide and moving said food parts from said static scale onto a discharge conveyor after weighing by said static scale.

According to an advantageous embodiment of the invention said static scale is mechanically decoupled from any of said conveyors.

The object is also achieved by a method for grading and batching of food parts, the method comprising at least the steps of the method for transportation and weighing of said food parts referred to hereinbefore to determine the weights of said food parts, a plurality of batch bins adapted to receive a set of selected food parts, associating each batch bin with a controllable bin transfer unit adapted to selectively transfer particular ones of said food parts into a selected one of said batch bins, controlling said bin transfer unit in order to assemble a plurality of said food parts in each of said batch bins according to a predetermined provision of distribution with a control unit operatively connected with said scale unit and said bin transfer units.

To avoid repetition, reference is made with regard to the advantages arising from the inventive methods to the relevant passages in connection with the respective apparatus according to the invention.

The present disclosed subject matter is described herein with reference to the following drawing figures, with greater emphasis being placed on clarity rather than scale.
FIG. 1 is a perspective view of an embodiment of the weighing and transport/transportation system of the disclosed subject matter showing aspects the conveyor system.
FIG. 2 is a top plan view of the weigh/weighing station of the disclosed subject matter.
FIG. 3 is an enlarged plan view of the conveyor system of the disclosed subject matter.

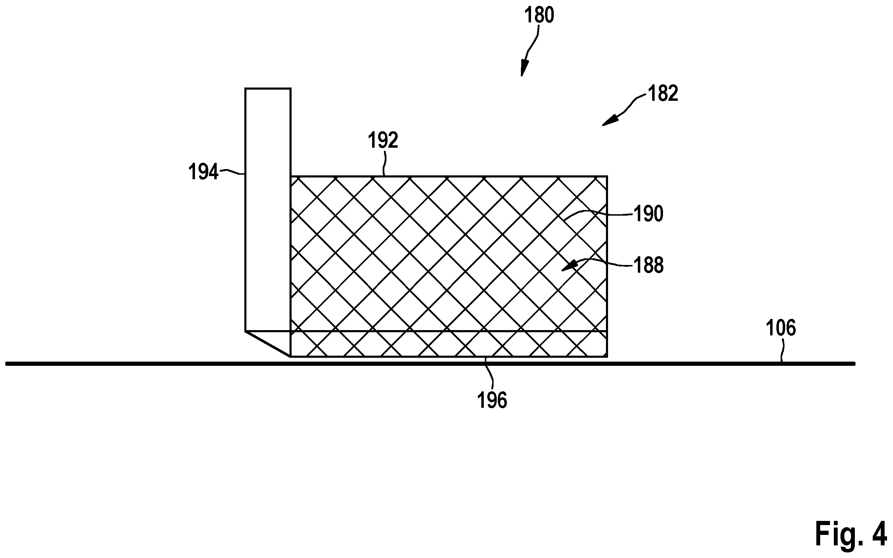

FIG. 4 is an elevation view of the guide assembly of the disclosed subject matter.
FIG. 5 is a perspective view of a further embodiment of the guide assembly of the disclosed subject matter.

The disclosed subject matter pertains to a food processing weighing and transport system 100, in particular, for rapidly weighting food parts 102. Food parts 102 include tissues harvested from animals including, but not limited to, fish, crustaceans, poultry, pork, and beef. The harvested tissues are weighed and batched for shipment to a customer for sale to a consumer.

Apparatuses and methods for grading, batching, and selectively transferring food parts aid in the processing and weighing of food parts and may be used in conjunction with the disclosed system 100, and an example of such apparatuses and methods are disclosed in International Application No. PCT/US2020/047153, filed August 20, 2020, published as WO/2021/035025, on February 25, 2021.

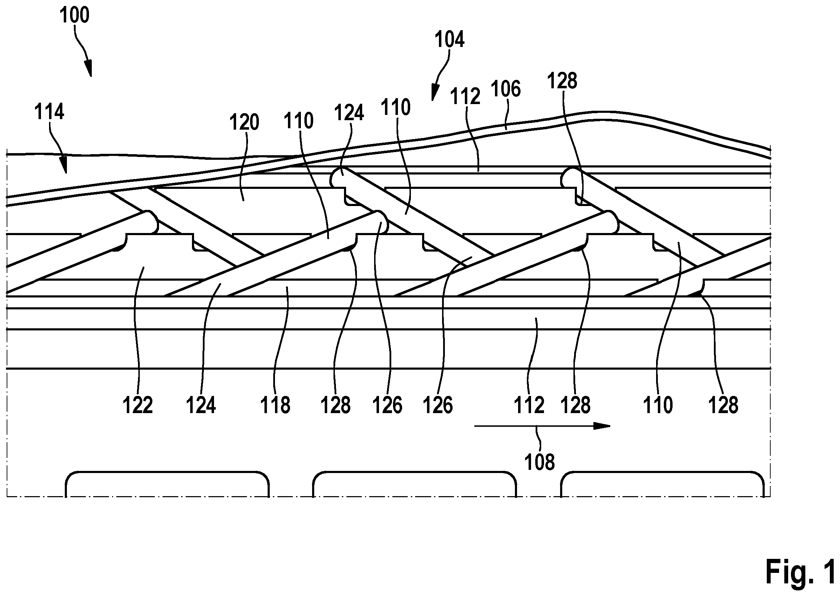

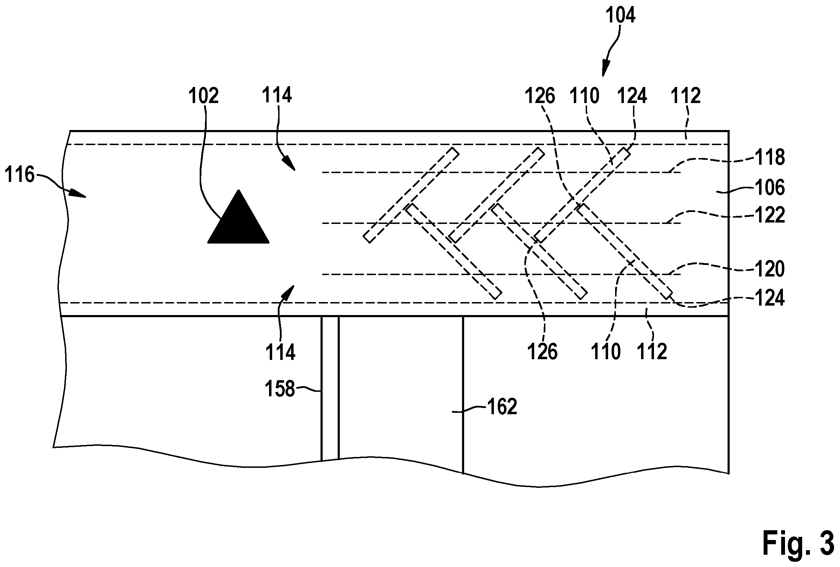

In an implementation, the system 100, under the control of a programmable logic controller (PLC), advances food parts 102 to and from a weigh/weighing station 150 on a conveyor system 104. Food parts 102 are weighed so that a plurality of weighed food parts 102 can be accurately batched into a target batch weight, thereby minimizing error in the weight of the target batch. Referring to FIGS. 1-3, the conveyor system 104 has a belt 106 that is advanced in a first direction 108 across ribs 110 extending between side rails 112. The side rails 112 and ribs 110 are manufactured from a resilient material, such as high-density polyethylene (HDPE) or ultra-high-molecular-weight polyethylene (UHMW). The side rails 112 provide support to the edge regions 114 of an underside of the belt 106. The ribs 110 provide support to a center region 116 of the underside of the belt 106 between the side rails 112, preventing the center region 116 from sagging below the level of the edge regions 114 due to the weight of the food part 102. As a result, the belt 106 presents a relatively flat surface for a guide assembly 180 to rapidly and accurately retrieve and replace food parts 102 during the weighing process. In an implementation, the ribs 110 are cylindrically shaped.

The ribs 110 are supported by opposing first and second side supports 118, 120, and a center support 122. The spacing between ribs 110 provides openings allowing air to pass through. Each rib 110 extends from a first end 124 adjacent a side rail through a side support and the center support 122 terminating at a second end 126 disposed between the center support 122 and the opposite side support forming transverse supports for the belt 106. In particular, the second end 126 of each rib 110 extends from the first side support 118 terminating adjacent a rib 110 extending from the second side support 120, and where the second end 126 of each rib 110 extending from the second side support 120 terminates adjacent a rib 110 extending from the first side support 118 appearing aligned inclined relative to the side supports 118, 120. Thus, when viewed from above, the ribs 110 form a general herringbone pattern.

The supports have notches 128 for locating the ribs 110. The belt 106 moves in the first direction 108 and the underside of the belt 106 slides across the side rails 112 and ribs 110. The additional support provided by the ribs 110 limits the depression of the center region 116 of the belt 106 minimizing the height variability encountered by the guide assemblies 180 when removing food parts 102 from the conveyor system 104 for static weighing at the weigh station 150, and when the guide assemblies 180 deposit food parts 102 onto the conveyor system 104 after static weighing. Further, the spaced arrangement of the ribs 110 in the herringbone pattern facilitates cleaning of the components and underlying supports and distributes wear of the belt 106 more evenly along the underside of the belt 106 than if the center region 116 was instead supported by supports orientated in parallel to the side rails 112.

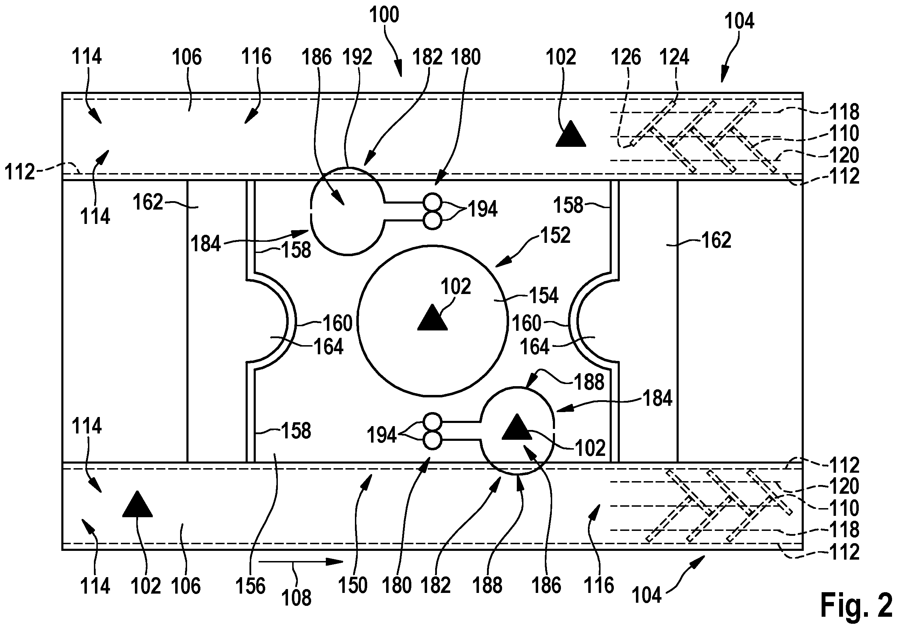

Referring to FIG. 2, the conveyor system 104 is shown with a weigh station 150. The weigh station 150 includes a scale unit 152 between opposing conveyor systems 104 moving in opposing directions. Food parts 102 are removed from the belt 106 by the guide assemblies 180.

The guide assemblies 180 are operated similarly to the leading and trailing arm assemblies of the PCT Application in that a transfer assembly is operably connected to a first guide 182 and opposing second guide 184 for lifting and rotating the first and second guides 182, 184 relative to the belt 106, and related to a platform 156 and deck 154 of the weight station 150.

The movement of food parts 102 and machinery in high-speed food weighing and transportation systems can move large volumes of air through the system and surrounding environment. This air movement affects the speed of weight measurements and accuracy of weight measurements. The air movement creates an undesirable force on the scale, which introduces noise into the weight measurement, thus affecting the accuracy of the weight measurement.

Traditional systems use guides of a solid structure that capture and move air when in operation, introducing noise into the weight measurement. The noise dissipates after a brief amount of time however, delaying acquisition of each weight measurement, which results in a large cumulative delay in processing of food parts 102 thereby decreasing the through-put of food processing operations. In an implementation, the weighing and transport system 100 includes guides 182, 184 with a guidance face forming a receptacle, such as a pocket area 186, formed to be freely permeable by air, such as by forming a perforated region 188. The perforated region 188 is formed from an arrangement of structural material permitting air to pass through the structural material as the guide is rotated between the belt 106 and weigh station 150, thereby minimizing the effect of air resistance on the movement of the guide, minimizing the effect of air movement on the speed of the weighing step, and minimizing the effect of air movement on the accuracy of the weight measurement of the food part 102 by the scale unit 152. In an implementation, at least fifty percent of the guidance face is permeable to air. As the amount of structural material is reduced in the perforated region 188, the amount of air being moved by the guide, and in conjunction with the guide, decreases. This in turn decreases air movement of the system 100 and minimizes the error or noise induced in the weight measurement of a food part 102 by the force of the air on the scale unit 152 and food part 102, thereby increasing the accuracy of the weight measurement and the through-put of the system 100.

In an implementation, the perforated region 188 is a lattice-like structure, such as screen 190 supported by a frame 192. The frame 192 forms the screen 190 into a concave pocket 186 for capturing the food part 102. In an implementation, the screen 190 and support frame 192 are manufactured from metal, including stainless steel, and in an implementation, the screen 190 is manufactured from round wire. The frame 192 is connected to a support 194 operably connected to the transfer assembly. A lower edge 196 of the frame 192 is adjacent the belt 106 and weight station 150.

The guides 182, 184 cooperate to move food parts 102 from the conveyor system 104 to the scale unit 152 and from the scale unit 152 to the conveyor system 104. As the food part 102 moves on the belt 106 toward the weigh station 150, an actuator, such as a servomotor, rotates the guides 182, 184 in tandem over the food part 102 whereby the food part 102 is positioned between opposing pockets 186 and captured by the guide assembly 180. Each of guide 182 and 184 can move independently in the vertical direction allowing the system 100 to position the guides relative to the food part 102, thereby optimizing the position of the guide prior to movement of the food part 102 and to avoid contacting the food part 102 prior to movement of the food part 102. The guide assembly 180 rotates, moving the captured food part 102 laterally from the conveyor system 104 to the scale unit 152.

The scale unit 152 has a deck 154 operably connected to a force sensor, such as a load cell, forming a static scale, for statically weighing food parts 102. The force sensor is operably connected to the PLC for recording and tracking the weight of the food part 102. The deck 154 is disposed adjacent the guide assembly 180, and is surrounded by a platform 156. In an implementation, the platform 156 extends between adjacent conveyor systems 104, and the deck 154 is located between adjacent guide assemblies 180. The scale unit 152 can be isolated from the surrounding conveyor system, such as by mechanically decoupling the scale unit 152 from the conveyor, to minimize the introduction of vibrations from the surrounding machinery into the weight measurement taken of the food part 102.

The disclosed subject matter allows an increase in the processing of food parts 102 from approximately thirty pieces per minute to approximately sixty pieces per minute due to a reduction in the dwell time, or the amount of time the food part 102 needs to reside on the scale unit 152, in order to take an accurate measurement of the weight, because, in part, the perforated region 188 results in a decrease in the amount of air movement attributable to movement of the guide assemblies 180 that can adversely affect the weight detected by the scale unit 152. The decreased air movement permits a higher throughput of food parts 102 through the weigh station 150, and results in an improvement of the weight accuracy during a measurement within 0.10 gram.

The guide assemblies 180 rotate rapidly between the belt 106 and weight station 150. During normal operation, food parts 102 are transferred from the moving belt 106 onto the static scale unit 152 and back without incident. However, opposing fences 158 adjacent the platform prevent errant food parts 102 ejected from the guide assembly 180 from exiting the platform 156. The fence 158 forms a curved wall 160 extending toward the deck 154 further limiting the lateral travel of an ejected food part 102. A cap 162 adjacent an upper edge of the fence 158 prevents ejected food parts 102 from exiting the weigh station 150. The cap 162 forms an overhang 164 over the curved wall 160.

An implementation of the system 100 includes batch bins adapted to receive food parts 102. Guide assemblies, such as guide assemblies 180 can be associated with one or more batch bins. The system 100 controls the guide assemblies to selectively transfer food parts 102 to assemble a plurality of food parts in one or more batch bins according to a predetermined provision of distribution. In an implementation, the predetermined distribution includes a selected batch bin containing a plurality of food parts 102 each within a range of weight, or a selected batch bin containing a plurality of food parts 102 in total within a range of weight.

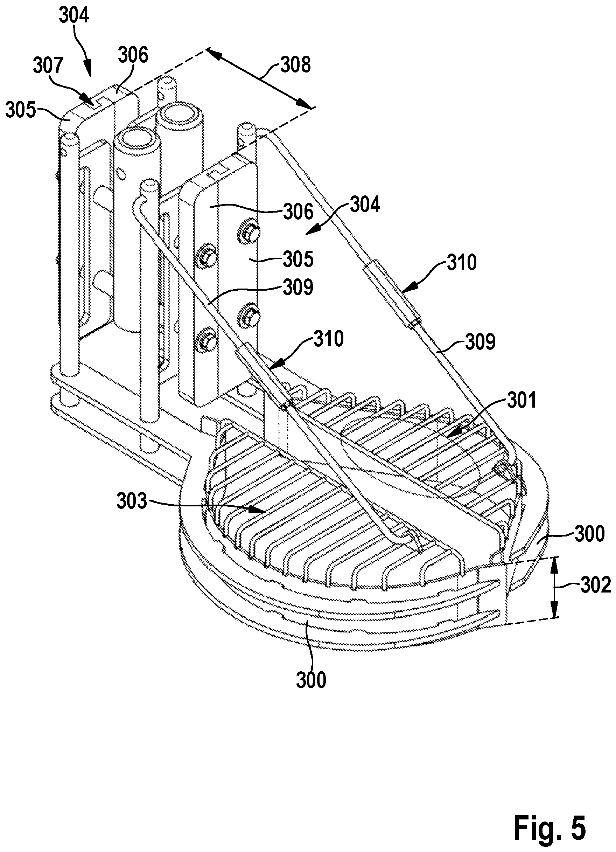

Fig. 5 shows a perspective view of a further embodiment of the guide assembly. As shown, said first guide comprises a first guidance arm having a closed surface 300 adapted to move said particular ones of said food parts 102, wherein said guidance face is arranged on top of said guidance arm forming a first upper guide 301.

A preferred development of the invention is characterized in that the height 302 of said first guidance arm is slightly greater than the maximum height of any one of said particular ones of said food parts. Advantageously, the height 302 of said first guidance arm is adapted to the maximum height of said food parts in order to minimize any air movement caused by said first guidance arm.

A preferred embodiment is characterized in that said second guide comprises a second guidance arm having a closed surface 300 adapted to move said particular ones of said food parts, wherein said guidance face is arranged on top of said second guidance arm forming a second upper guide 303.

According to an advantageous development, the height 302 of said second guidance arm is slightly greater than the maximum height of any one of said particular ones of said food parts. A further preferred embodiment of the invention provides that said first actuator and said second actuator each comprise end stopping elements 304 adapted to limit the pivoting range of said first guidance arm and said second guidance arm.

A further advantage of the invention is characterized in that said end stopping elements 304 each comprise a pivotable first end member 305 attached to said first or second actuator and a stationary second end member 306, wherein said first end member and said second end member have correspondingly shaped contact regions 307 adapted for interlocking with each other. A preferred embodiment is characterized in that said end stopping elements 304 are spaced apart from each other. In Fig. 5, the distance 308 between said end stopping elements 304 is shown.

A preferred embodiment is characterized in that said first actuator and said second actuator each comprises a supporting element 309 attached with one end to a free end region of said first guide and said second guide, respectively, and the other end attached to said first actuator and said second actuator having an inclined position. A further advantage of the invention is characterized in that said supporting elements 309 are length-adjustable. Fig. 5 exemplarily shows length-adjustment elements 310.

A preferred embodiment is characterized in that the end stopping elements 307 are detachably arranged. This offers the advantage that end stopping elements 307 can be replaced easily and/or can be inspected during maintenance. For example, the end stopping elements 307 are detachably fixed with bolts.

## Claims

1. Apparatus for transporting and weighing (100) of food parts (102), the apparatus comprising:
a conveying system (104) adapted to advance said food parts (102) in a first direction (108) comprising at least one belt conveyor (106),
a weighing station (150) comprising at least one scale unit (152) adapted to determine the weights of said food parts (102),
at least one controllable transfer unit adapted to selectively transfer particular ones of said food parts (102) from said belt conveyor (106) to said scale unit (152) or vice versa, wherein
said transfer unit comprises at least one pivotable first guide (182) adapted to controllably transfer said particular ones of said food parts (102),
**characterized in that**
said first guide (182) comprises a guidance face permeable to air.

2. Apparatus (100) according to claim 1, **characterized in that** said guidance face is perforated.

3. Apparatus (100) according to claim 1 or 2, **characterized in that** said guidance face has a lattice-like structure.

4. Apparatus according to any one of claims 1 to 3, **characterized in that** at least 50 percent of said guidance face is permeable to air.

5. Apparatus (100) according to any one of claims 2 to 4, **characterized in that** said guidance face comprises a grid constructed from round wires.

6. Apparatus (100) according to any one of claims 1 to 5, **characterized in that** said first guide (182) comprises a pocket (186) having a receptable for capturing said food part (102).

7. Apparatus (100) according to any one of claims 1 to 6, **characterized in that** said first guide (182) comprises a first guidance arm having a closed surface (300) adapted to move said particular ones of said food parts (102), wherein said guidance face is arranged on top of said guidance arm forming a first upper guide (301).

8. Apparatus (100) according to claim 1, **characterized in that** the height (302) of said first guidance arm is slightly greater than the maximum height of any one of said particular ones of said food parts (102).

9. Apparatus (100) according to any one of claims 1 to 8, **characterized in that** said scale unit (152) comprises a static scale and a pivotable second guide, wherein said first guide (182) is operably controlled by a first actuator and said second guide (184) is operably controlled by a second actuator and wherein said first guide (182) is adapted to controllably move food parts (102) supplied by said first conveyor onto said scale and the second guide (184) is adapted to controllably move said food parts (102) from said scale onto a discharge conveyor after weighing.

10. Apparatus (100) according to claim 9, **characterized in that** said second guide (184) comprises a second guidance arm having a closed surface (300) adapted to move said particular ones of said food parts (102), wherein said guidance face is arranged on top of said guidance arm forming a second upper guide (303).

11. Apparatus (100) according to claim 10, **characterized in that** the height (302) of said guidance arm is slightly greater than the maximum height of any one of said particular ones of said food parts (102).

12. Apparatus (100) according to any one of claims 9 to 11, **characterized in that** said first actuator and said second actuator each comprise end stopping elements (304) adapted to limit the pivoting range of said first guidance arm and said second guidance arm.

13. Apparatus (100) according to claim 12, **characterized in that** said end stopping elements (304) each comprise a pivotable first end member (305) attached to said first or second actuator and a stationary second end member (306), wherein said first end member and said second end member have correspondingly shaped contact regions (307) adapted for interlocking with each other.

14. Apparatus (100) according to claim 13, **characterized in that** said end stopping elements (304) are spaced apart from each other.

15. Apparatus (100) according to any one of claims 9 to 14, **characterized in that** said first actuator and said second actuator each comprises a supporting element (309) attached with one end to a free end region of said first guide (182) and said second guide (184), respectively, and the other end attached to said first actuator and said second actuator having an inclined position.

16. Apparatus (100) according to claim 15, **characterized in that** said supporting elements (309) are length adjustable.

17. Apparatus (100) according to any one of claims 12 to 16, **characterized in that** the end stopping elements (309) are detachably arranged.

18. Apparatus (100) according to any one of claims 9 to 17, **characterized in that** said static scale is mechanically decoupled from any of said conveyors.

19. Apparatus (100) according to any one of claims 1 to 18, **characterized in that** said conveyors comprise openings allowing air to pass through.

20. Apparatus (100) according to claim 19, **characterized in that** said conveyors comprise elongated side support elements extending in said first direction and transverse support elements (309) arranged in between said side support elements.

21. Apparatus (100) according to claim 20, characterized that said transverse support elements are aligned inclined relating to said side support elements.

22. Apparatus (100) according to claim 20 or 21, **characterized in that** said transverse support elements forms a staggered support structure.

23. Apparatus (100) according to claim 22, **characterized in that** said staggered support structure is arranged in a herringbone pattern.

24. Apparatus (100) according to any one of claims 20 to 23, **characterized in that** the transverse support elements are cylindrically shaped.

25. Apparatus (100) for grading and batching of food parts (102), the apparatus comprising at least one apparatus (100) for transporting and weighing said food parts (102) according to any one of claims 1 to 24 to determine the weights of said food parts (102), a plurality of batch bins adapted to receive a set of selected food parts (102),
wherein each said batch bin is associated with a controllable transfer unit adapted to selectively transfer particular ones of said food parts (102) into a selected one of said batch bins,
a control unit operatively connected with said scale unit (152) and said transfer unit, wherein said control unit is adapted to control said transfer unit in order to assemble a plurality of said food parts (102) in each of said bins according to a predetermined provision of distribution.

26. Method for transporting and weighing of food parts, the method comprising the steps:
conveying the food parts (102) in a first direction (108) by a conveying system (104) comprising at least one belt conveyor (106),
determining the weights of said food parts (102) with a weighing station (150) comprising at least one scale unit (152),
selectively transferring particular ones of said food parts (102) from said belt conveyor (106) to said scale unit (152) or vice versa by at least one controllable transfer unit by pivoting a first guide (182) to controllably transfer said particular ones of said food parts (102),
**characterized in that**
said first guide (182) comprises a guidance face permeable to air allowing air to pass through said first guide while pivoting.

27. Method according to claim 26, **characterized in that** said particular ones of said food parts (102) are transferred by said first guide (182) having a perforated guidance face.

28. Method according to claim 26 or 27, **characterized in that** said guidance face has a lattice-like structure.

29. Method according to any one of claims 26 to 28, **characterized in that** at least 50 percent of said guidance face is permeable to air.

30. Method according to any one of claims 27 to 29, **characterized in that** said guidance face comprises a grid constructed from round wires.

31. Method according to any one of claims 26 to 30, **characterized in that** said food parts (102) are captured within a receptable formed by a pocket of said first guide (182).

32. Method according to any one of claims 26 to 31, **characterized by** weighing said food parts (102) with said scale unit (152), wherein said scale unit comprises a static scale and
operably controlling said first guide (182) by a first actuator and a second guide by a second actuator,
moving said food parts (102) supplied by said first conveyor onto said static scale by said first guide (182) and moving said food parts (102) from said static scale onto a discharge conveyor after weighing by said static scale.

33. Method according to claim 32, **characterized in that** said static scale is mechanically decoupled from any of said conveyors.

34. Method for grading and batching of food parts (102), the method comprising at least the method steps according to any one of claims 26 to 33 to determine the weights of said food parts (102),
a plurality of batch bins adapted to receive a set of selected food parts (102), associating each batch bin with a controllable bin transfer unit adapted to selectively transfer particular ones of said food parts (102) into a selected one of said batch bins, controlling said bin transfer unit in order to assemble a plurality of said food parts (102) in each of said batch bins according to a predetermined provision of distribution with a control unit operatively connected with said scale unit (152) and said bin transfer units.

## Patentansprüche

1. Vorrichtung zum Transportieren und Wiegen (100) von Lebensmittelteilen (102), wobei die Vorrichtung umfasst:
ein Fördersystem (104), das eingerichtet ist, um die Lebensmittelteile (102) in einer ersten Richtung (108) vorwärts zu bewegen, und mindestens ein Förderband (106) umfasst,
eine Wiegestation (150) umfassend mindestens eine Wiegeeinheit (152), die eingerichtet ist, um das Gewicht der Lebensmittelteile (102) zu bestimmen,
mindestens eine steuerbare Überführeinheit, die eingerichtet ist, bestimmte Lebensmittelteile (102) selektiv von dem Förderband (106) zu der Wiegeeinheit (152) oder umgekehrt zu überführen, wobei
die Überführeinheit mindestens eine schwenkbare erste Führung (182) umfasst, die eingerichtet ist, um die bestimmten Lebensmittelteile (102) steuerbar zu überführen,
**dadurch gekennzeichnet, dass**
die erste Führung (182) eine luftdurchlässige Führungsfläche umfasst.

2. Vorrichtung (100) nach Anspruch 1, **dadurch gekennzeichnet, dass** die Führungsfläche perforiert ist.

3. Vorrichtung (100) nach Anspruch 1 oder 2, **dadurch gekennzeichnet, dass** die Führungsfläche eine gitterartige Struktur aufweist.

4. Vorrichtung nach einem der Ansprüche 1 bis 3, **dadurch gekennzeichnet, dass** mindestens 50 Prozent der Führungsfläche luftdurchlässig sind.

5. Vorrichtung (100) nach einem der Ansprüche 2 bis 4, **dadurch gekennzeichnet, dass** die Führungsfläche ein Gitter aus Runddrähten umfasst.

6. Vorrichtung (100) nach einem der Ansprüche 1 bis 5, **dadurch gekennzeichnet, dass** die erste Führung (182) eine Tasche (186) mit einer Aufnahme zum Auffangen des Lebensmittelteils (102) umfasst.

7. Vorrichtung (100) nach einem der Ansprüche 1 bis 6, **dadurch gekennzeichnet, dass** die erste Führung (182) einen ersten Führungsarm mit einer geschlossenen Oberfläche (300) umfasst, die eingerichtet ist, um die bestimmten Lebensmittelteile (102) zu bewegen, wobei die Führungsfläche oben auf dem Führungsarm angeordnet ist und eine erste obere Führung (301) bildet.

8. Vorrichtung (100) nach Anspruch 1, **dadurch gekennzeichnet, dass** die Höhe (302) des ersten Führungsarms geringfügig größer ist als die maximale Höhe eines beliebigen der bestimmten Lebensmittelteile (102).

9. Vorrichtung (100) nach einem der Ansprüche 1 bis 8, **dadurch gekennzeichnet, dass** die Wiegeeinheit (152) eine statische Waage und eine schwenkbare zweite Führung umfasst, wobei die erste Führung (182) durch einen ersten Antrieb gesteuert wird und die zweite Führung (184) durch einen zweiten Antrieb gesteuert wird ist und wobei die erste Führung (182) eingerichtet ist, um von dem ersten Förderer zugeführte Lebensmittelteile (102) steuerbar auf die Waage zu bewegen, und die zweite Führung (184) eingerichtet ist, um die Lebensmittelteile (102) nach dem Wiegen von der Waage auf ein Abfuhrband zu bewegen.

10. Vorrichtung (100) nach Anspruch 9, **dadurch gekennzeichnet, dass** die zweite Führung (184) einen zweiten Führungsarm mit einer geschlossenen Oberfläche (300) umfasst, der eingerichtet ist, um die bestimmten Lebensmittelteile (102) zu bewegen, wobei die Führungsfläche oben auf dem Führungsarm angeordnet ist und eine zweite obere Führung (303) bildet.

11. Vorrichtung (100) nach Anspruch 10, **dadurch gekennzeichnet, dass** die Höhe (302) des Führungsarms geringfügig größer ist als die maximale Höhe eines beliebigen der bestimmten Lebensmittelteile (102).

12. Vorrichtung (100) nach einem der Ansprüche 9 bis 11, **dadurch gekennzeichnet, dass** der erste Antrieb und der zweite Antrieb jeweils Endanschlagelemente (304) aufweisen, die eingerichtet sind, um den Schwenkbereich des ersten Führungsarms und des zweiten Führungsarms zu begrenzen.

13. Vorrichtung (100) nach Anspruch 12, **dadurch gekennzeichnet, dass** die Endanschlagelemente (304) jeweils ein schwenkbares erstes Endelement (305), das an dem ersten oder zweiten Antrieb befestigt ist, und ein ortsfestes zweites Endelement (306) umfassen, wobei das erste Endelement und das zweite Endelement entsprechend geformte Kontaktbereiche (307) aufweisen, die eingerichtet sind, miteinander in Eingriff zu kommen.

14. Vorrichtung (100) nach Anspruch 13, **dadurch gekennzeichnet, dass** die Endanschlagelemente (304) voneinander beabstandet sind.

15. Vorrichtung (100) nach einem der Ansprüche 9 bis 14, **dadurch gekennzeichnet, dass** der erste Antrieb und der zweite Antrieb jeweils ein Stützelement (309) umfassen, das mit einem Ende an einem freien Endbereich der ersten Führung (182) bzw. der zweiten Führung (184) befestigt ist und dessen anderes Ende an dem ersten Antrieb und dem zweiten Antrieb mit einer geneigten Position befestigt ist.

16. Vorrichtung (100) nach Anspruch 15, **dadurch gekennzeichnet, dass** die Stützelemente (309) längenverstellbar sind.

17. Vorrichtung (100) nach einem der Ansprüche 12 bis 16, **dadurch gekennzeichnet, dass** die Endanschlagelemente (309) lösbar angeordnet sind.

18. Vorrichtung (100) nach einem der Ansprüche 9 bis 17, **dadurch gekennzeichnet, dass** die statische Waage mechanisch von allen Förderern entkoppelt ist.

19. Vorrichtung (100) nach einem der Ansprüche 1 bis 18, **dadurch gekennzeichnet, dass** die Förderer Öffnungen aufweisen, die einen Luftdurchtritt ermöglichen.

20. Vorrichtung (100) nach Anspruch 19, **dadurch gekennzeichnet, dass** die Förderer längliche Seitenstützelemente, die sich in der ersten Richtung erstrecken, und Querstützelemente (309), die zwischen den Seitenstützelementen angeordnet sind, umfassen.

21. Vorrichtung (100) nach Anspruch 20, **dadurch gekennzeichnet, dass** die Querstützelemente relativ zu den Seitenstützelementen geneigt ausgerichtet sind.

22. Vorrichtung (100) nach Anspruch 20 oder 21, **dadurch gekennzeichnet, dass** die Querstützelemente eine versetzte Stützstruktur bilden.

23. Vorrichtung (100) nach Anspruch 22, **dadurch gekennzeichnet, dass** die versetzte Stützstruktur in einem Fischgrätenmuster angeordnet ist.

24. Vorrichtung (100) nach einem der Ansprüche 20 bis 23, **dadurch gekennzeichnet, dass** die Querstützelemente zylindrisch geformt sind.

25. Vorrichtung (100) zur Klassifizierung und Chargenbildung von Lebensmittelteilen (102), wobei die Vorrichtung umfasst: mindestens eine Vorrichtung (100) zum Transportieren und Wiegen der Lebensmittelteile (102) nach einem der Ansprüche 1 bis 24, um die Gewichte der Lebensmittelteile (102) zu bestimmen,
eine Mehrzahl von Chargenbehältern, die eingerichtet sind, einen Satz ausgewählter Lebensmittelteile (102) aufzunehmen,
wobei jeder Chargenbehälter mit einer steuerbaren Übertragungseinheit verbunden ist, die eingerichtet ist, um bestimmte Lebensmittelteile (102) selektiv in einen ausgewählten Chargenbehälter zu überführen,
eine Steuereinheit, die funktionsfähig mit der Wiegeeinheit (152) und der Übertragungseinheit verbunden ist, wobei die Steuereinheit eingerichtet ist, um die Übertragungseinheit so zu steuern, dass in jedem der Behälter eine Mehrzahl der Lebensmittelteile (102) gemäß einer vorbestimmten Verteilungsvorgabe zusammengestellt werden.

26. Verfahren zum Transportieren und Wiegen von Lebensmittelteilen, wobei das Verfahren die folgenden Schritte umfasst:
Fördern der Lebensmittelteile (102) in einer ersten Richtung (108) durch ein Fördersystem (104), das mindestens ein Förderband (106) umfasst,
Bestimmen der Gewichte der Lebensmittelteile (102) mit einer Wiegestation (150), die mindestens eine Wiegeeinheit (152) umfasst,
selektives Überführen bestimmter Lebensmittelteile (102) von dem Förderband (106) an die Wiegeeinheit (152) oder umgekehrt durch mindestens eine steuerbare Überführeinheit durch Schwenken einer ersten Führung (182), um die bestimmten Lebensmittelteile (102) steuerbar zu überführen,
**dadurch gekennzeichnet, dass**
die erste Führung (182) eine luftdurchlässige Führungsfläche aufweist, die beim Schwenken Luft durch die erste Führung hindurchströmen lässt.

27. Verfahren nach Anspruch 26, **dadurch gekennzeichnet, dass** die bestimmten Lebensmittelteile (102) von der ersten Führung (182) mit einer perforierten Führungsfläche überführt werden.

28. Verfahren nach Anspruch 26 oder 27, **dadurch gekennzeichnet, dass** die Führungsfläche eine gitterartige Struktur aufweist.

29. Verfahren nach einem der Ansprüche 26 bis 28, **dadurch gekennzeichnet, dass** mindestens 50 Prozent der Führungsfläche luftdurchlässig sind.

30. Verfahren nach einem der Ansprüche 27 bis 29, **dadurch gekennzeichnet, dass** die Führungsfläche ein aus Runddrähten aufgebautes Gitter umfasst.

31. Verfahren nach einem der Ansprüche 26 bis 30, **dadurch gekennzeichnet, dass** die Lebensmittelteile (102) in einer Aufnahme erfasst werden, die durch eine Tasche der ersten Führung (182) gebildet wird.

32. Verfahren nach einem der Ansprüche 26 bis 31, **gekennzeichnet durch** Wiegen der Lebensmittelteile (102) mit der Wiegeeinheit (152), wobei die Wiegeeinheit eine statische Waage umfasst, und
betriebsfähiges Steuern der ersten Führung (182) durch einen ersten Antrieb und einer zweiten Führung durch einen zweiten Antrieb,
Bewegen der von dem ersten Förderer zugeführten Lebensmittelteile (102) auf die statische Waage durch die erste Führung (182) und Bewegen der Lebensmittelteile (102) von der statischen Waage auf ein Abfuhrband nach dem Wiegen durch die statische Waage.

33. Verfahren nach Anspruch 32, **dadurch gekennzeichnet, dass** die statische Waage mechanisch von allen Förderern entkoppelt ist.

34. Verfahren zur Klassifizierung und Chargenbildung von Lebensmittelteilen (102), wobei das Verfahren umfasst: mindestens die Verfahrensschritte nach einem der Ansprüche 26 bis 33 umfasst, um die Gewichte der Lebensmittelteile (102) zu bestimmen,
eine Mehrzahl von Chargenbehältern, die zur Aufnahme eines Satzes ausgewählter Lebensmittelteile (102) eingerichtet sind,
Zuordnen jedes Chargenbehälters zu einer steuerbaren Behälterübertragungseinheit, die eingerichtet ist, um bestimmte der Lebensmittelteile (102) selektiv in einen ausgewählten der Chargenbehälter zu überführen,
Steuern der Behälterübertragungseinheit, um mit einer Steuereinheit, die funktionsfähig mit der Wiegeeinheit (152) und den Behälterübertragungseinheiten verbunden ist, in jedem der Chargenbehälter mehrere der Lebensmittelteile (102) gemäß einer vorbestimmten Verteilungsvorgabe zusammenzustellen.

## Revendications

1. Appareil pour transporter et peser (100) des parties d'aliments (102), l'appareil comprenant :
un système de convoyage (104) adapté pour faire avancer lesdites parties d'aliments (102) dans une première direction (108) comprenant au moins un convoyeur à bande (106),
une station de pesage (150) comprenant au moins une unité de balance (152) adaptée pour déterminer les poids desdites parties d'aliments (102),
au moins une unité de transfert commandable adaptée pour transférer de manière sélective des parties d'aliments particulières parmi lesdites parties d'aliments (102) dudit convoyeur à bande (106) vers ladite unité de balance (152) ou vice versa,
ladite unité de transfert comprenant au moins un premier guide pivotant (182) adapté pour transférer de manière commandable lesdites parties d'aliments particulières parmi lesdites parties d'aliments (102),
**caractérisé en ce que**
ledit premier guide (182) comprend une face de guidage perméable à l'air.

2. Appareil (100) selon la revendication 1, **caractérisé en ce que** ladite face de guidage est perforée.

3. Appareil (100) selon la revendication 1 ou 2, **caractérisé en ce que** ladite face de guidage présente une structure de type treillis.

4. Appareil selon l'une quelconque des revendications 1 à 3, **caractérisé en ce qu'**au moins 50 % de ladite face de guidage est perméable à l'air.

5. Appareil (100) selon l'une quelconque des revendications 2 à 4, **caractérisé en ce que** ladite face de guidage comprend une grille construite à partir de fils ronds.

6. Appareil (100) selon l'une quelconque des revendications 1 à 5, **caractérisé en ce que** ledit premier guide (182) comprend une poche (186) ayant un réceptacle pour capturer ladite partie d'aliment (102).

7. Appareil (100) selon l'une quelconque des revendications 1 à 6, **caractérisé en ce que** ledit premier guide (182) comprend un premier bras de guidage ayant une surface fermée (300) adaptée pour déplacer lesdites parties d'aliments particulières parmi lesdites parties d'aliments (102), ladite face de guidage étant agencée sur le dessus dudit bras de guidage formant un premier guide supérieur (301).

8. Appareil (100) selon la revendication 1, **caractérisé en ce que** la hauteur (302) dudit premier bras de guidage est légèrement supérieure à la hauteur maximale de l'une quelconque desdites parties d'aliments particulières parmi lesdites parties d'aliments (102).

9. Appareil (100) selon l'une quelconque des revendications 1 à 8, **caractérisé en ce que** ladite unité de balance (152) comprend une balance statique et un deuxième guide pivotant, ledit premier guide (182) étant commandé de manière opérationnelle par un premier actionneur et ledit deuxième guide (184) étant commandé de manière opérationnelle par un deuxième actionneur, et ledit premier guide (182) étant adapté pour déplacer de manière commandable les parties d'aliments (102) fournies par ledit premier convoyeur sur ladite balance et le deuxième guide (184) étant adapté pour déplacer de manière commandable lesdites parties d'aliments (102) de ladite balance sur un convoyeur de déchargement après le pesage.

10. Appareil (100) selon la revendication 9, **caractérisé en ce que** ledit deuxième guide (184) comprend un deuxième bras de guidage ayant une surface fermée (300) adaptée pour déplacer lesdites parties d'aliments particulières parmi lesdites parties d'aliments (102), ladite face de guidage étant agencée sur le dessus dudit bras de guidage formant un deuxième guide supérieur (303).

11. Appareil (100) selon la revendication 10, **caractérisé en ce que** la hauteur (302) dudit bras de guidage est légèrement supérieure à la hauteur maximale de l'une quelconque desdites parties d'aliments particulières parmi lesdites parties d'aliments (102).

12. Appareil (100) selon l'une quelconque des revendications 9 à 11, **caractérisé en ce que** ledit premier actionneur et ledit deuxième actionneur comprennent chacun des éléments d'arrêt d'extrémité (304) adaptés pour limiter la plage de pivotement dudit premier bras de guidage et dudit deuxième bras de guidage.

13. Appareil (100) selon la revendication 12, **caractérisé en ce que** lesdits éléments d'arrêt d'extrémité (304) comprennent chacun un premier élément d'extrémité pivotant (305) attaché audit premier ou deuxième actionneur et un deuxième élément d'extrémité stationnaire (306), ledit premier élément d'extrémité et ledit deuxième élément d'extrémité ayant des régions de contact de forme correspondante (307) adaptées pour s'emboîter l'une dans l'autre.

14. Appareil (100) selon la revendication 13, **caractérisé en ce que** lesdits éléments d'arrêt d'extrémité (304) sont espacés les uns des autres.

15. Appareil (100) selon l'une quelconque des revendications 9 à 14, **caractérisé en ce que** ledit premier actionneur et ledit deuxième actionneur comprennent chacun un élément de support (309) attaché par une extrémité à une région d'extrémité libre dudit premier guide (182) et dudit deuxième guide (184), respectivement, et l'autre extrémité attachée audit premier actionneur et audit deuxième actionneur ayant une position inclinée.

16. Appareil (100) selon la revendication 15, **caractérisé en ce que** lesdits éléments de support (309) sont ajustables en longueur.

17. Appareil (100) selon l'une quelconque des revendications 12 à 16, **caractérisé en ce que** les éléments d'arrêt d'extrémité (309) sont agencés de manière détachable.

18. Appareil (100) selon l'une quelconque des revendications 9 à 17, **caractérisé en ce que** ladite balance statique est découplée mécaniquement de l'un quelconque desdits convoyeurs.

19. Appareil (100) selon l'une quelconque des revendications 1 à 18, **caractérisé en ce que** lesdits convoyeurs comprennent des ouvertures permettant à l'air de passer à travers.

20. Appareil (100) selon la revendication 19, **caractérisé en ce que** lesdits convoyeurs comprennent des éléments de support latéraux allongés s'étendant dans ladite première direction et des éléments de support transversaux (309) agencés entre lesdits éléments de support latéraux.

21. Appareil (100) selon la revendication 20, **caractérisé en ce que** lesdits éléments de support transversaux sont alignés de manière inclinée par rapport auxdits éléments de support latéraux.

22. Appareil (100) selon la revendication 20 ou 21, **caractérisé en ce que** lesdits éléments de support transversaux forment une structure de support décalée.

23. Appareil (100) selon la revendication 22, **caractérisé en ce que** ladite structure de support décalée est agencée selon un motif en chevrons.

24. Appareil (100) selon l'une quelconque des revendications 20 à 23, **caractérisé en ce que** les éléments de support transversaux sont de forme cylindrique.

25. Appareil (100) pour classer et portionner des parties d'aliments (102), l'appareil comprenant au moins un appareil (100) pour transporter et peser lesdites parties d'aliments (102) selon l'une quelconque des revendications 1 à 24 afin de déterminer les poids desdites parties d'aliments (102),
une pluralité de bacs de portionnement adaptés pour recevoir un ensemble de parties d'aliments sélectionnées (102),
chaquedit bac de portionnement étant associé à une unité de transfert commandable adaptée pour transférer de manière sélective des parties d'aliments particulières parmi lesdites parties d'aliments (102) dans un bac de portionnement sélectionné parmi lesdits bacs de portionnement,
une unité de commande reliée de manière opérationnelle à ladite unité de balance (152) et à ladite unité de transfert, ladite unité de commande étant adaptée pour commander ladite unité de transfert afin d'assembler une pluralité desdites parties d'aliments (102) dans chacun desdits bacs selon une disposition de distribution prédéterminée.

26. Procédé pour transporter et peser des parties d'aliments, le procédé comprenant les étapes suivantes :
le convoyage des parties d'aliments (102) dans une première direction (108) par un système de convoyage (104) comprenant au moins un convoyeur à bande (106),
la détermination des poids desdites parties d'aliments (102) à l'aide d'une station de pesage (150) comprenant au moins une unité de balance (152),
le transfert sélectif de parties d'aliments particulières parmi lesdites parties d'aliments (102) dudit convoyeur à bande (106) vers ladite unité de balance (152) ou vice versa par au moins une unité de transfert commandable en faisant pivoter un premier guide (182) afin de transférer de manière commandable lesdites parties d'aliments particulières parmi lesdites parties d'aliments (102),
**caractérisé en ce que**
ledit premier guide (182) comprend une face de guidage perméable à l'air permettant à l'air de passer à travers ledit premier guide pendant le pivotement.

27. Procédé selon la revendication 26, **caractérisé en ce que** lesdites parties d'aliments particulières parmi lesdites parties d'aliments (102) sont transférées par ledit premier guide (182) ayant une face de guidage perforée.

28. Procédé selon la revendication 26 ou 27, **caractérisé en ce que** ladite face de guidage présente une structure de type treillis.

29. Procédé selon l'une quelconque des revendications 26 à 28, **caractérisé en ce qu'**au moins 50 % de ladite face de guidage est perméable à l'air.

30. Procédé selon l'une quelconque des revendications 27 à 29, **caractérisé en ce que** ladite face de guidage comprend une grille construite à partir de fils ronds.

31. Procédé selon l'une quelconque des revendications 26 à 30, **caractérisé en ce que** lesdites parties d'aliments (102) sont capturées dans un réceptacle formé par une poche dudit premier guide (182).

32. Procédé selon l'une quelconque des revendications 26 à 31, **caractérisé par** le pesage desdites parties d'aliments (102) avec ladite unité de balance (152), ladite unité de balance comprenant une balance statique et
la commande opérationnelle dudit premier guide (182) par un premier actionneur et d'un deuxième guide par un deuxième actionneur,
le déplacement desdites parties d'aliments (102) fournies par ledit premier convoyeur sur ladite balance statique par ledit premier guide (182) et le déplacement desdites parties d'aliments (102) de ladite balance statique sur un convoyeur de déchargement après le pesage par ladite balance statique.

33. Procédé selon la revendication 32, **caractérisé en ce que** ladite balance statique est découplée mécaniquement de l'un quelconque desdits convoyeurs.

34. Procédé pour classer et portionner des parties d'aliments (102), le procédé comprenant au moins les étapes de procédé selon l'une quelconque des revendications 26 à 33 pour déterminer les poids desdites parties d'aliments (102),
une pluralité de bacs de portionnement adaptés pour recevoir un ensemble de parties d'aliments sélectionnées (102),
l'association de chaque bac de portionnement à une unité de transfert de bacs commandable adaptée pour transférer de manière sélective des parties d'aliments particulières parmi lesdites parties d'aliments (102) dans un bac de portionnement sélectionné parmi lesdits bacs de portionnement,
la commande de ladite unité de transfert de bacs afin d'assembler une pluralité desdites parties d'aliments (102) dans chacun desdits bacs de portionnement selon une répartition de distribution prédéterminée avec une unité de commande reliée de manière opérationnelle à ladite unité de balance (152) et auxdites unités de transfert de bacs.
